# EUROPÄISCHE PATENTSCHRIFT

(11) **EP 0 938 393 B1**
(45) Veröffentlichungstag und Bekanntmachung des Hinweises auf die Patenterteilung: **02.07.2003**
(21) Anmeldenummer: 96933312.9
(22) Anmeldetag: 05.08.1996
(51) Int. Cl.: B21D 51/26, B65D 53/06

(54) **FREMDGESTEUERTES AUFTRAGEN VON COMPOUND IN DOSENBORDE**
EXTERNALLY CONTROLLED APPLICATION OF COMPOUND IN EDGES OF CANS
APPLICATION PILOTEE DE MASSES D'ETANCHEITE SUR LES REBORDS DE BOITES DE CONSERVES

(30) Priorität: 04.08.1995 DE 19528749; 25.10.1995 DE 19539689
(43) Veröffentlichungstag der Anmeldung: 01.09.1999
(73) Patentinhaber: Impress GmbH & Co. oHG, 38723 Seesen (DE)
(72) Erfinder: PETER, Wolfgang, D-27474 Cuxhaven (DE); HARTUNG, Hans, D-38106 Braunschweig (DE); POZAS, Jesus, Diez, D-27474 Cuxhaven (DE)
(74) Vertreter: Leonhard, Frank Reimund, Dipl.-Ing.
(86) Internationale Anmeldenummer: DE9601459
(87) Internationale Veröffentlichungsnummer: WO97005975

(56) Entgegenhaltungen:
- WO-A-92/15402
- DE-C- 958 085
- US-A- 1 861 589
- PATENT ABSTRACTS OF JAPAN vol. 95, no. 1, 28.Februar 1995 & JP,A,06 277594 (YAGUCHI TEKKOSHO : KK), 4.Oktober 1994,

## Beschreibung

Die Erfindung befaßt sich mit dem technischen Gebiet des Auftragens von fluidem Dichtungswerkstoff in einen Deckel- oder Bodenbord (Deckel- oder Rumpfhaken) von Konservendosen, wie Fisch- oder Food-Konserven.

Das technische Gebiet wird beschrieben von der "gattungsbildenden" **DE-A 958 085** (Karl Wange). Sie beschreibt einen Nadelkranz, der durch entsprechende Bodenlöcher in einem Behälter für Dichtungsmittel greift. Die Nadeln sind mit erweiternden Köpfen versehen und werden in ihrer axialen Position dadurch gesteuert, daß der Dosenbord von unten gegen die "Pilzköpfe" gepresst wird, um **alle** Nadeln gleichzeitig anzuheben und den Compound aufzutragen (vgl. dort Seite 2, linke Spalte unten, rechte Spalte oben).

Abseits von diesem technische Gebiet ist die **US-A 3,289,898** (Walter Herman) angesiedelt, die das Auftragen von Klebstoff betrifft. Sie beschreibt das "dosierte Auslagern" von Klebstoff aus einem dreieckförmigen Behälter (dort 10), der an seinem spitzen Auslaufende eine feste und eine flexible Wand (dort 15) hat, durch die eine Platte (dort 17) wiederholt axial hindurch ("recipocating") gedrückt wird, um abgemessene Mengen von Klebstoff austreten zu lassen (vgl. dort gesamte Spalte 4).

In dem eingangs angesprochenen technischen Gebiet geht die Erfindung **von der Aufgabe aus**, den Compound (fluiden Dichtungswerkstoff) genauer, gleichmäßiger und schonender auf den Rumpfhaken oder Deckelhaken aufzutragen, um besonders bei geringen Bleckdicken unter 0,24 mm eine Beschädigung der metallischen Auftragsstelle zu vermeiden. Obwohl mit der Erfindung der Auftrag schonender erfolgen soll, soll er dosierter und positionsgenauer sein, so daß der entstehende Dichtungsring R (aus verfestigtem Compound C) sehr genau die Breite, Dicke und Plazierung im Deckelhaken oder Rumpfhaken erhält, um die Dichtheit des später aus ihm gebildeten Doppelfalzverschlusses zu gewährleisten und außerdem Dichtungsmittel C einzusparen.

Mit der Erfindung wird das dann erreicht, wenn die axiale Verstellung der Nadeln, die die wirksame Öffnung im Boden des Dichtungsmittelbehälters steuern, von rückwärts erfolgt oder wenn der Innensteg (Ringsteg), der in einen Bodenschlitz des Behälters ragt, von rückwärts gesteuert wird, um den Durchlaßquerschnitt für das Dichtungsmittel zu verändern.

Es wird vermieden, daß auf die Stirn- oder Frontseite der Nadeln oder des Ringsteges eine Kraft vom Deckel- oder Behälterrand aufgebracht wird, vielmehr ist das Steuerglied (Ringsteg/Nadeln) so ausgebildet, daß es den Boden der umlaufenden Rinne (Deckelhaken/Rumpfhaken) nicht oder nur kräftelos berührt. Die Steuerung seiner Position erfolgt mechanisch von der anderen Seite, also entweder innerhalb des Compound-Behälters oder oberhalb des Compound-Behälters.

Die Steuerung kann stetig durch Verändern eines Dichtungssitzes erfolgen, auch kann ein Abscheren des Dichtungsfluids (Ein/Aus-Steuerung) eingesetzt werden.

Die Steuerung der Position/Dicke erfolgt mit einer Dichtungsring-Messung und einer Nachstellung der Nadeln bzw. des Steuersteges über den extern von rückwärts einwirkenden Weggeber.

Die Abtastzeit des Messung der Dicke oder Position kann sich ändern, abhängig von einem vorgehenden Verstellvorgang der Compound-Stellglieder, um im wesentlichen von einem stationären Zustand auszugehen und viele Messungen nur dann vorzunehmen, wenn eine Änderung des stationären Zustandes veranlaßt wurde.

Die Ventilwirkung, die über einen stetig steuerbaren schrägen Bereich des Ringsteges mit entsprechender Gegenschräge in dem bodenseitigen Schlitz erreicht werden kann oder aber über eine Zusammenwirkung von bodenseitiger Kante und stufigem Bereich im Steuerring, erreicht eine gute Steuerbarkeit bei gleichzeitiger hoher Genauigkeit des Dichtungsmittel-Flusses beim Auftragen des Dichtungsringes R im Dosenbord.

Die Wahl einer stufigen Ventilwirkung sichert einen genauen Zeitpunkt, zu dem das Dichtungsmittelfluid im Fluß unterbrochen wird, und es kann damit das zeitlich präzise Beenden erreicht werden, mithin die genaue Dosiermenge vorgegeben werden.

Vorgegeben wird die Dosiermenge durch die Zeitdauer der Öffnung des Ventils im Boden. Vorgegeben sein kann die durchfließende Menge aber auch durch die Öffnungshöhe des stufigen Bereichs gegenüber der umlaufenden Kante des Bodenschlitzes, wenn man die Viskosität des Dichtungsmittels berücksichtigt. Ist der Abstand zwischen der stufigen Kante des Ringsteges zur Innenseite des Bodens größer als die verbleibende Durchflußbreite des in seiner Breite reduzierten Bodenkanals, so wird keine steuernde Wirkung erreicht. Ab dem Zeitpunkt jedoch, zu dem sich die Stufe dem Boden so weit nähert, daß der quer verlaufende Einflußbereich am Boden geringer wird, als der senkrecht verlaufende Rest-Durchflußkanal, setzt die Steuerbarkeit ein. Die Stellhöhe ist dann weitgehend linear mit der Menge des durchfließenden Dichtungsmittels verknüpft.

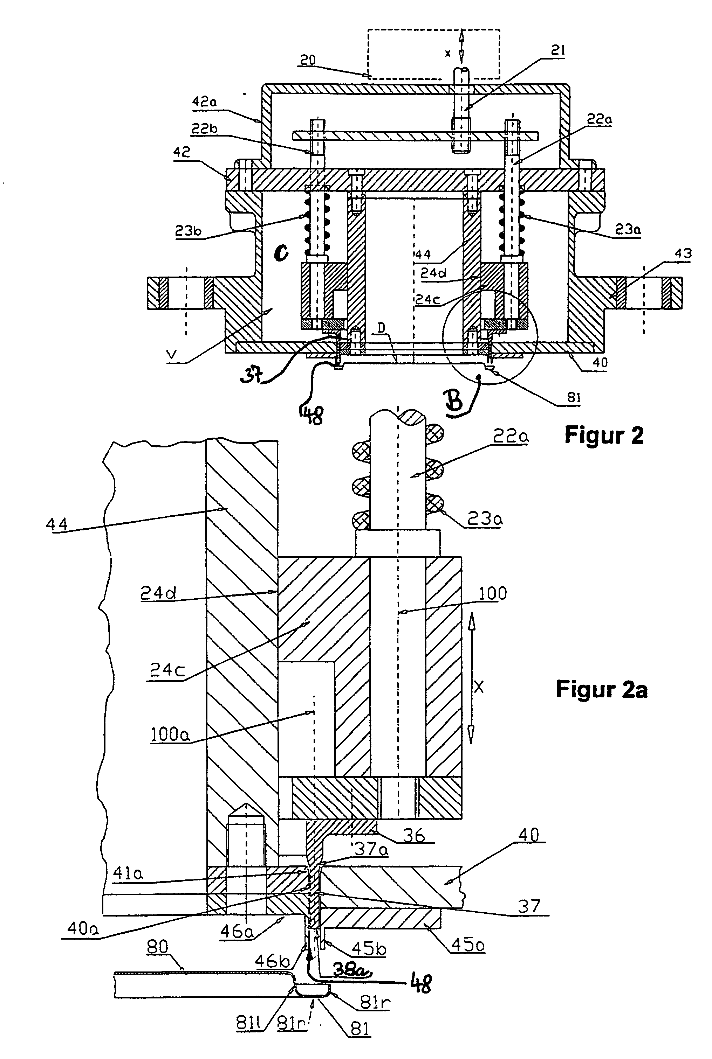

Die Erfindung(en) werden nachfolgend anhand mehrerer Ausführungsbeispiele erläutert und ergänzt.
- **Figur 1**: ist ein erstes Ausführungsbeispiel einer Auftrageinheit für fluiden Dichtungswerkstoff C in den Bord oder Rand 81 eines Deckels D. Ein ovales Volumen V, begrenzt von einer inneren Wand 44 und einer äußeren Wand 43 beherbergt, ggf. unter Druck, das fluide Dichtungsmittel C. Ein Weggeber 20 liegt außerhalb/oberhalb des Volumens V.
- **Figur 1a**: ist die Ausschnittsvergrößerung A der Figur 1, betreffend die Nadelführung 30a an zwei beabstandeten Nadelhaltern 24a,24b, die über einen Bolzen 22a aufwärts und abwärts in Richtung x bewegbar sind. Die Bewegung wird von dem außenliegenden Weggeber 20 vorgegeben.
- **Figur 2**: zeigt eine alternative Gestaltung einer Auftragseinheit für fluiden Dichtungswerkstoff C mit einem umlaufenden Steuersteg 37, der in einen Bodenschlitz 40a ragt, der in einen Auftragskanal 48 mündet, der von zwei festen Randstegen 46b,45b begrenzt ist.
- **Figur 2a**: ist die Ausschnittsvergrößerung B aus **Figur 2**, die die Steg-Führung 36, 37 zusammen mit einem einstückigen Gleitgürtel 24c zeigt.
- **Figur 2b**: ist eine alternative Ausschnittsvergößerung B zur Figur 2, wobei die . Steg-Führung 36,37 auch zusammen mit dem einstückigen Gleitgürtel 24c dargestellt ist. Der in Figur 2a gezeigte kontinuierliche Ventilsitz 37a,41a ist hier als stufiger Ventilsitz 37b,41b ausgebildet.
Mit ihm kann eine sofortige Unterbrechung des Dichtungsmittelstromes erreicht werden. Die Breite des Ringsteges 37b im Bodenkanal 40a ist gegenüber der Figur 2a reduziert. Der verbleibende Restkanal 40a ist außenseitig gelegen, er kann aber ebenso innenseitig gelegen sein, wenn die Stufe 37b im Ringsteg 37 auf der Innenseite ausgebildet wird.

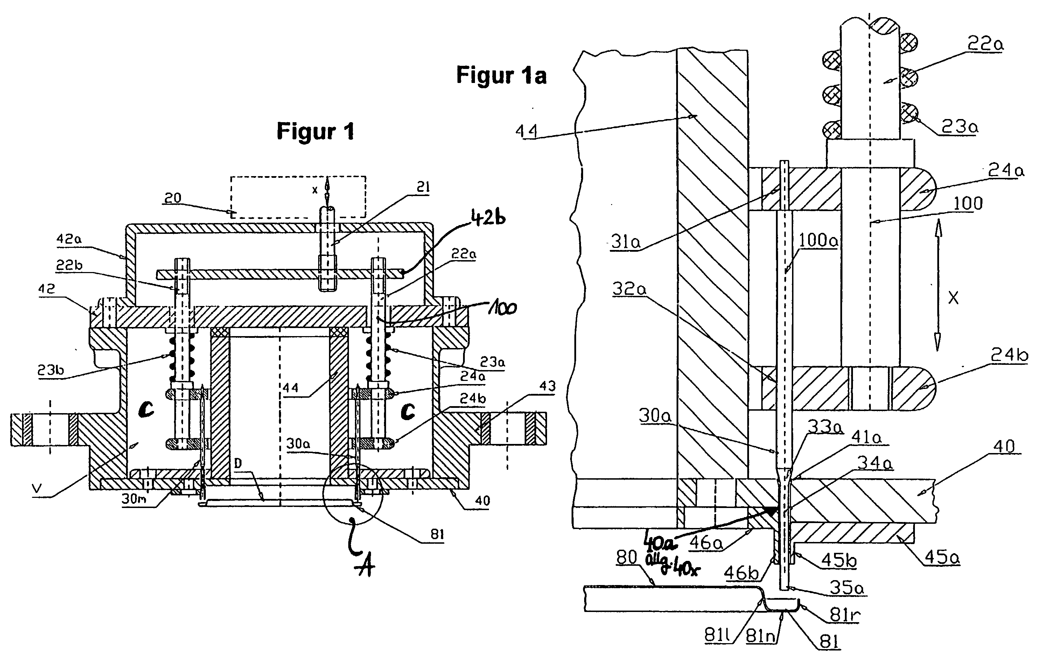

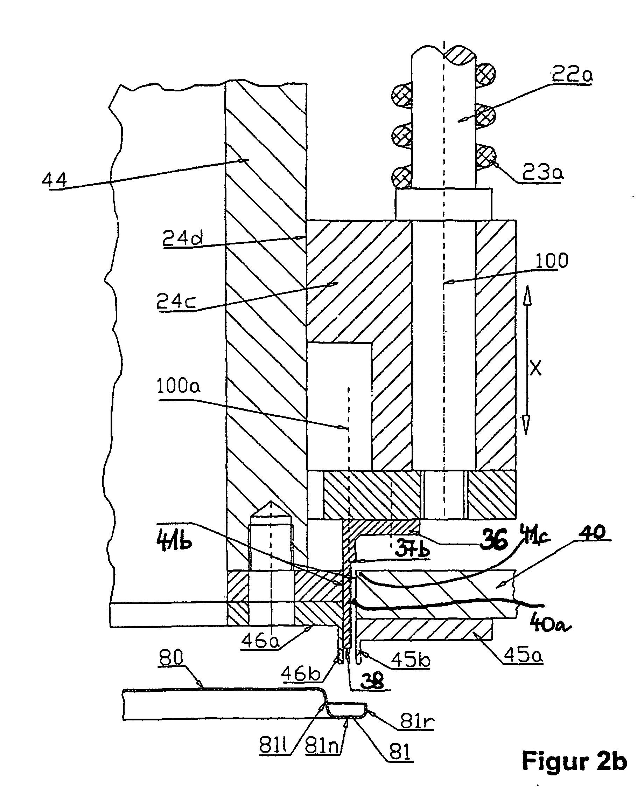

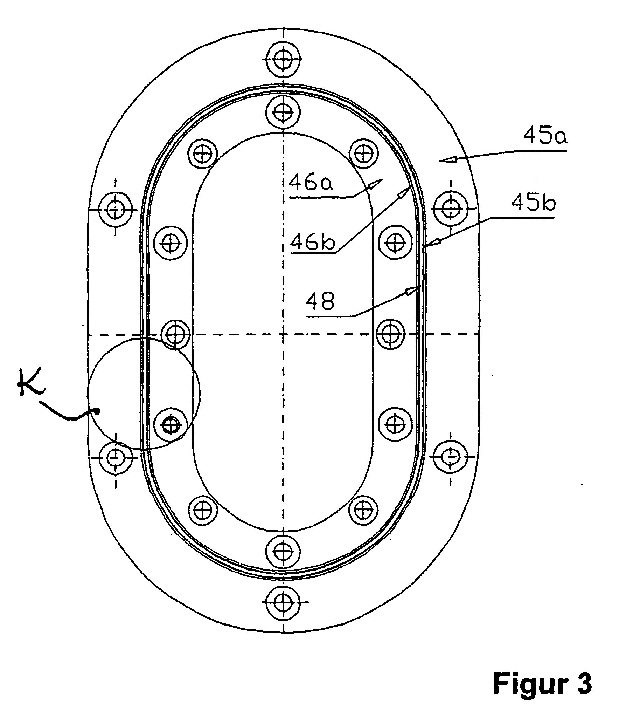

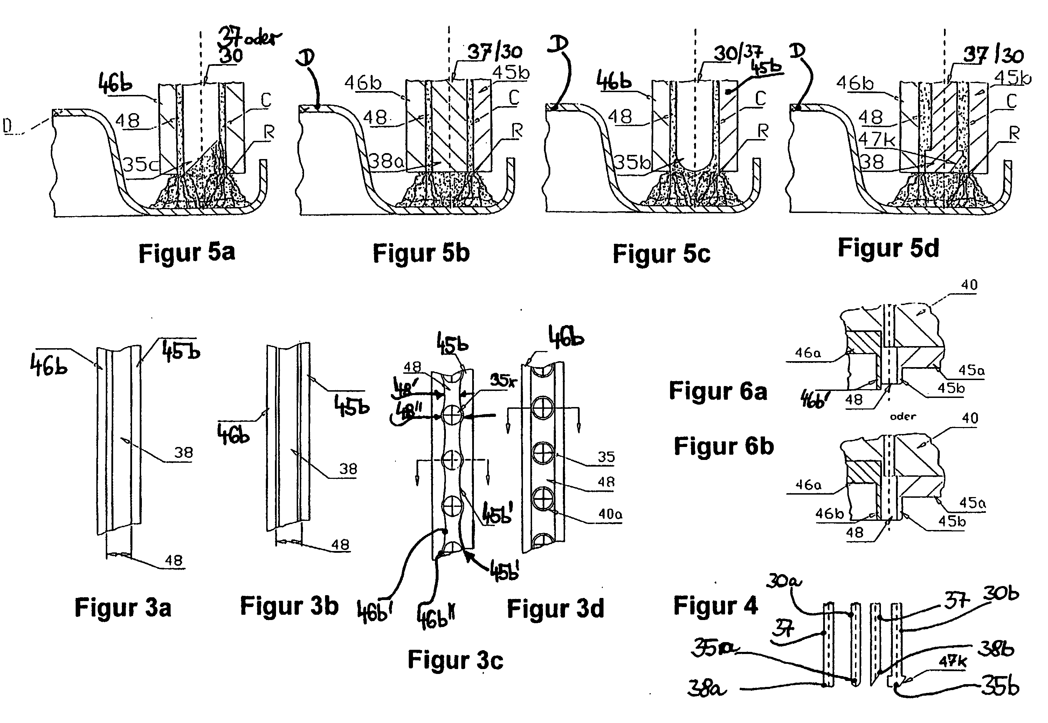

- **Figur 3**: ist eine Aufsicht auf die Einrichtung von **Figur 1** oder **Figur 2** von unten, in der der Kanal 48 erkennbar ist, der von zwei festen Außen-Stegen 45b, 46b begrenzt ist. Er dient als Auftragskanal für den Dichtungswerkstoff C.
- **Figur 3a, Figur 3b**: zeigen in Ausschnittsvergrößerungen den Bereich K von **Figur 3** (Ausführung gem. Figur 2a oder 2b), wobei der Kanal 48 und der in ihm geführte Innensteg 37, 38 erkennbar sind; erkennbar ist auch eine Profilierung 38r, 38m der Frontseite des Innenstegs (Steuersteges).
- **Figur 3c, Figur 3d**: zeigt in gleicher Weise wie Figur 3a den Bereich K in der Ausführung gemäß Figur 1a. Hier ist der Kanal 48 periodisch in seiner Breite 48',48" verändert, jeweils dort am breitesten, wo die Nadeln 30x in ihn münden. 30x ist eine allgemeine Abkürzung für viele Nadeln 30a, 30b, ..., die in einem Nadelhalter 24a,24b gehalten sind und alle gleichzeitig von ihm geführt werden.
- **Figur 4**: zeigt Stirnseite Gestaltungen 35a,35b der Nadeln 30a, 30b, ..., im folgenden allgemein mit 30x bezeichnet, und stirnseitige Enden 38a,38b der Steuerstege 37.
- **Figur 5a, Figur 5b, Figur 5c, Figur 5d**: verdeutlichen in schematischen Bildern im Querschnitt, wie der Compound (Dichtungswerkstoff) C aus dem Kanal 48 durch randseitige Spalte zwischen dem Steuerring 37 und den kanalbegrenzenden Stegen 45b, 46b hindurchfließt und einen Dichtungsring R in einer umlaufenden Rinne 81n am Deckel D bildet. Der Compund C ist punktiert eingezeichnet. In gleicher Weise ist der Querschnitt auch eine Seitenansicht der Ausbildung von Nadeln 30x, die der Figur 1 folgt und gemäß Figuren 3c und 3d in den Kanal ragen.
- **Figur 6a, Figur 6b**: zeigen Randhöhen-Veränderungen 46b' der Kanalbegrenzung 46b,45b, zur Beeinflussung der Zielrichtung des C-Flusses.

**Figur 1** veranschaulicht einen Schnitt durch ein Gerät zum Auftragen eines Dichtungsmittels C, das in dem erwähnten Volumen V gelagert ist. Das Volumen V ist rechteckig oder oval und erstreckt sich in vertikaler Richtung, begrenzt von einer Innenwandung 44 und einer Außenwandung 43. In dem Volumen V mit Erstreckung in axialer Richtung 100 ist ein Gürtel 24a, 24b aus zwei ebenfalls oval gebildeten ringförmigen Platten mit einem vorgegebenen Abstand gebildet. Der Gürtel entspricht in seiner Form weitgehend der Form des Auftragskanals 81, in den das flüssige Dichtungsmittel C aufgetragen werden soll.

Ausgehend von dem beabstandeten ringförmigen Platten 24a, 24b werden eine Vielzahl von umfänglich in der Form des Dosenbordes 81 beabstandet gehaltenen und geführten Nadeln 30a, 30b, 30c (im folgenden allgemein mit 30x bezeichnet) kranzartig angeordnet, die durch bodenseitige Öffnungen 40a,40b,40c aus dem Behältervolumen V ragen. Die Unterseite 40 des Behälters ist also mit einer Vielzahl von aufgereihten Bohrungen 40x versehen, die dem Abstand der am Gleitgürtel 24a, 24b gehaltenen Nadeln 30x entsprechen.

Oberhalb des Gleitgürtels 24a,24b sind Führungs- und Befestigungsbolzen 22a,22b angeordnet, die über Federn gegenüber der Deckenplatte 42 des Behälters elastisch gelagert sind. Die Bolzen 22a,22b sind nur schematisch als zwei Bolzen dargestellt, bevorzugt können vier solcher Bolzen im Bereich der Enden der kurzen Seiten des ovalen Gleitgürtel-Ringes befestigt sein. Die Bolzen greifen nach aufwärts durch die Deckenplatte 42 hindurch, die die obere Begrenzung des Behältervolumens V bildet. Oberhalb der Deckenplatte 42 sind alle vier oder zumindest zwei dieser Bolzen über eine Verbindungsplatte 42b miteinander verbunden, die über einen Betätigungsbolzen 21 zu einem Weggeber 20 gekoppelt ist, der hier oberhalb eines Gehäusedeckels 42a angeordnet ist, der aber ebenso in dem Gehäusedeckel 42a vorgesehen sein kann. Er ist außerhalb des Volumens V für den Compound C vorgesehen.

Die Betätigungsrichtung, die auf den Betätigungsbolzen 21 und damit auf die zuvor beschriebene Führung und den Gleitgürtel und damit die Nadeln und am vorderen Ende folglich den später zu beschreibenden Dichtungssitz der Nadeln ausgeübt wird, ist mit x bezeichnet. Diese Bewegungsrichtung ist in der **Figur 1a** deutlicher erkennbar, auf die im folgenden Bezug genommen wird zur Beschreibung des Dichtungssitzes der Nadeln 30x.

Bevor auf den Dichtungssitz der Nadeln Bezug genommen wird, soll ein gleichwertiger Gleitgürtel 24c beschrieben werden, der anhand der **Figur 2 und Figur 2a** ersichtlich ist. Der dortige Gleitgürtel 24c bewegt sich auch in der Richtung x und wird gesteuert von demselben Weggeber 20 über den Betätigungsbolzen 21 und die Führungs- und Befestigungsbolzen 22a, 22b. Der Gleitgürtel gleitet unmittelbar an der Innenfläche 44 der Wandung, während der zuvor erwähnte Gleitgürtel 24a, 24b aus den zwei beabstandeten Platten nicht vollumfänglich an der Innenwand 44 gleiten muß. An dem Gleitgürtel 24c, der im Querschnitt eine L-förmige Struktur hat, ist an seiner Unterseite ein Steuersteg 37 ausgebildet, der eine ringförmig umlaufende Form hat und mit einem einstückig angeformten Winkelstück 36 am Boden des Ringgürtels 24c befestigt ist. Er ragt durch einen bodenseitigen Schlitz 40a im Behälterboden 40, der vergleichbar ist der Vielzahl von bodenseitigen Öffnungen 40a, 40b, (allgemein 40x) gemäß Figur 1a bei der Realisierung mit vielen beabstandeten Nadeln 30x.

Der Dichtungssitz des Ringsteges 37 in dem Bodenschlitz 40a gemäß Figur 2 und der Dichtungssitz der Vielzahl kranzartig angeordneter Nadeln in der Figur 1a, diesmal in einer Vielzahl von bodenseitigen Öffnungen 40x, wird gemeinsam beschrieben, da er technisch vergleichbar ist.

**In Figur 1a** ist ein kontinuierlich steuernder Dichtungssitz 41a, 33a gezeigt, bestehend aus einer konischen Übergangsfläche von einem dickeren Nadelschaft 30a zu einem dünneren Nadelschaft 34a. Beide Schäfte sind in der Achse 100a der Nadel und die konische Dichtungsfläche 33a läuft konzentrisch um diese Achse 100a. Eine axiale Aufwärts- oder Abwärts-Verstellbewegung x gemäß der eingezeichneten Pfeilrichtung über den Nadelhalter 24a, 24b ermöglicht die kontinuierliche Veränderung des Dichtungssitzes und damit die Veränderung der Compound-Menge, die durch die verbleibende lichte Weite der bodenseitigen Öffnung 40a hindurchfließt. Die verbleibende lichte Weite ergibt sich aus der Differenz der Durchmesser der zylindrischen Öffnung 40a im Boden 40 des Behälters und dem Durchmesser des dünneren Nadelschaftes 34a.

Das Dichtungsmittel wird weiter geleitet in den Auftragskanal 48, der von zwei Randstegen 45b, 46b umlaufend begrenzt wird. Am unteren Ende ist der Dosenbord 81 mit innerem und äußerem Rand 811, 81r zu erkennen. Der durch die Auftragung zu beschichtende Boden 81 n der Auftragsrinne 81 ist der empfindliche Teil, der bei geringer Blechdicke ohne eine Kraft genau und dichtungsmittel-sparend zu beschichten ist. Dabei berührt weder das stimseitige Ende 35a der Nadel 30a den Boden 81n mit kräftemäßiger Beanspruchung - leichtes Aufliegen kann zugelassen werden -, noch berühren die Stirnenden der Randstege 46b, 45b des Auftragskanales 48 den Boden 81n.

Ein ebenfalls kontinuierlich gesteuerter Dichtungssitz ist in der **Figur 2a** gezeigt, im Falle der Anwendung eines Steuersteges 37, der ebenfall in einem Auftragskanal 48 mündet, wie zuvor erläutert. Der Dichtungssitz 37a ist eine an beiden Seitenflächen des Steuersteges 37 ausgebildete Schrägfläche, die zu entsprechenden Gegenschrägen 41a im Bodenschlitz 40a des Behälterbodens 40 passen. Vergleichbar mit der zylindrischen Nadel 30 mit ihren verschieden dicken Schäften 30a, 34a, ist hier ein umlaufender Steg vorgesehen, mit größerer Breite oberhalb des Bodens 40, also innerhalb des Behältervolumens V, und mit einer geringeren Breite im Bodenschlitz 40a, wobei die verbleibende lichte Weite im Bodenschlitz sich aus der Differenz der Bodenschlitz-Breite und der Steuersteg-Dicke ergibt.

Der Steuersteg 37,36 ist L-förmig ausgebildet, er trägt oberhalb seines breiteren Bereiches ein quer verlaufendes Winkelstück 36, mit dem er an der Unterseite des als Gleitgürtel 24c ausgebildeten Ringsteg-Halters angeordnet ist.

Ein gegenüber der Figur 2a und der Figur 1a noch weiterer Dichtungssitz ist in der **Figur 2b** dargestellt. Dieser Dichtungssitz orientiert sich im Aufbau an dem Steuersteg 37 der Figur 2a, beinhaltet aber keine geschrägte und demnach kontinuierlich wirkende Dichtungsfläche, sondern eine abscherende stufige Dichtung 37b, die oberhalb des Dichtungssitzes, der von der oberen Kante 41c des Bodenschlitzes 40a des Behälters gebildet wird, ausgeformt ist. Bei einem axialen Verstellen des Haltegürtels 24c, erreicht die erwähnte Dichtungsstufe 37b bei Bewirkungen einer Dichtungsmittel-Abscherung die Kante 41c des Bodenschlitzes 40a und kann bei weiterem Eindringen in den Bodenschlitz 40a eine noch bessere Dichtwirkung erzielen. Die Stärke des Steuersteges 37 und seine radiale Plazierung kann so gewählt werden, daß die verbleibende lichte Weite 41b des Bodenschlitzes 40a zum Durchfluß des Compounds auf beiden Seiten der Ache 100a des Steuersteges 37 unterschiedlich gestaltet ist. Im dargestellten Beispiel ist die äußere lichte Weite des verbleibenden Durchlaßkanals 41b maximal, während die innere durch ein enges Anliegen der Innenfläche des Steuersteges 37 an der Innenwand des Bodenschlitzes 40a Null ist. In dieser Gestaltung kann ab einer vorgegebenen axialen Stellung x_{Null} eine lineare Verstellwirkung erreicht werden, wenn der Abstand von oberer (in der Figur) rechter Kante 41c des Bodens 40 und oberer rechter Kante des stufigen Dichtungsbereiches 37b gleich der lichten Weite 41b des Bodenschlitzes 40a ist. Von hier bis zum vollständigen Verschließen des Dichtungssitzes ergibt sich eine lineare Stellmöglichkeit, mit einem genau definierten Abscherpunkt, zu dem der Dichtungsmittel-Fluß Null ist. Oberhalb des erwähnten Punktes x_{Null} wird von einer axialen Verstellbewegung x keine Veränderung der Menge des Dichtungsmittels erreicht.

In allen zuvor erläuterten Dichtungssitzen werden bestimmte Gestaltungsprinzipien gleichermaßen verwendet. Ein umlaufender Auftragskanal 48, der **in der Figur 3** von der Unterseite her verdeutlichend dargestellt ist. Er wird begrenzt von einem inneren Randsteg 46b und einem äußeren Randsteg 45b. Die Randstege münden in horizontale Flansche 45a, 46a, die am Boden 40 des Compound-Behälters 43,44 befestigt sind.

Der Auftragskanal 48 hat die Form des Zieles, also die hier dargestellte langovale Form des Deckelrandes 81, der mit einem Dichtungsmittel-Ring R zu beschichten ist.

Alle Nadeln 30x gemäß Figur 1a werden gleichzeitig betätigt, veranlaßt durch die federnd 23a,23b nach axial vorne vorgespannte Nadelhalterung 24a, 24b und die Stellstößel 22a. Alle Nadeln z.B. die Nadel 30a, sind an beabstandeten Stellen 31a, 32a in den ebenfalls entsprechender der Form des Behälterrandes 81 ausgebildeten Halteringen 24a, 24b befestigt. Auf diese Weise wird ein guter Gleichlauf aller Nadeln, die gleichzeitig betätigt werden, erreicht. Es wird eine gute Führung bereitgestellt und trotz einer Vielzahl von entlang des Dosenrandes 81 angeordneter Nadeln kann eine umfänglich gleichmäßig gesteuerte Dichtungsmittel-Menge aufgetragen werden.

Die von rückwärts gesteuerten Nadeln 30x oder die von rückwärts gesteuerten Steuerstege (Innenstege) 37 wirken keine Kraft auf den Boden 81n des Randes 81 aus. Selbst wenn sie mit ihrer Stirnseite 38a, 35a auf den Boden 81n des Deckel- oder Rumpfrandes aufliegen, benötigt man für das Lösen des zuvor erläuterten Dichtungssitzes keine Kraft, die vom Deckel 80 ausgeht. Vielmehr wird von rückwärts über die erwähnten Stellstößel 22a und ggf. eine oberhalb des Compound-Behältervolumens V und dessen abschließendem Deckel 42 ausgebildete Gleichlauf-Stelleinrichtung 21, 22a, 22b die Bewegung eines Weggebers (Stellmotor, Stellmagnet) in eine an der Auftragsstelle kräftelos wirkende Dichtungsmittel-Steuerung umgesetzt.

Selbst wenn Randstege 45b, 46b vorgesehen sind und die Stirnseite 35a, z.B. der Nadel 30a, in der Figur 1 über die Stirnenden der Randstege 45b, 46b hinausragt, wird vor Ausüben einer Kraft auf den Randboden 81n des Deckels 80 die Nadel 30a in x-Richtung zurückbewegt, um den Dichtungssitz 33a, 41a freizugeben und den Fluß des Compounds C aus dem Behältervolumen V in den Dosenbord 81 zu ermöglichen. Gleiches gilt für eine Nadellänge oder eine Steglänge, die anschaulich in der Figur 2a dargestellt ist. Hier ist der Steuersteg 37 kürzer ausgebildet, als das vordere Ende der den Auftragskanal 48 begrenzenden Randstege 45b, 46b. Auch hier wird sichergestellt, daß bei Annähern des Randes 81 des Deckels 80 keine Kraft - auch nicht von den Randstegen 45b, 46b - auf den Boden 81n des Deckelrandes ausgeübt wird.

**Die Figuren 3a und 3b** veranschaulichen den seitlich verlagerten Steuersteg 37 der Figur 2b gegenüber einem mittig ausgerichteten Steuersteg z.B. in der Figur 2a. Die beiden Randstege 45b, 46b sind links und rechts des Auftragskanales 48 dargestellt, die verbleibende lichte Weite, durch die das Dichtungsmittel fließen kann, wenn der Dichtungssitz 41a, 37a oder 37b, 41c freigegeben wird, ist anhand des Zwischenraumens zwischen jeweiliger Innenwand des Ringsteges 45b, 46b und der jeweiligen Außenwand des Steuersteges 37, dessen Stirnseite 38 hier nur sichtbar ist, erkennbar.

Für den Fall, daß Nadeln 30a, 30b (allgemein bezeichnet mit x=a,b,c,...) verwendet werden, kann der Auftragskanal 48 profiliert sein, wie **in der Figur 3c** dargestellt. Jeweils im Bereich des Eintritts des Stimendes 35x einer Nadel 30x in den Auftragskanal 48 ist dieser kreissegment-artig aufgeweitet, während sich die Randstege 45b, 46b zwischen jeweils zwei Eintrittsstellen von Nadeln 30a, 30b, etc. verjüngen. Der minimale Abstand der Innenwände der Randstege 45b, 46b ist mit 48' bezeichnet, der maximale Abstand, im Eintrittsbereich einer jeweiligen Nadel ist mit 48" benannt.

Der Fall, daß auch bei Verwendung von Nadeln 30, deren Stimseite 35 hier aus der Sicht von unten nur erkennbar ist, der Auftragskanal 48 eine konstante Breite hat, ist in **Figur 3d** veranschaulicht. Deutlich zu erkennen ist der lichte Raum zwischen der äußeren Nadeloberfläche und der inneren Bohrungswand 40a jeder bodenseitigen Bohrung im Behälterboden 40. Durch ihn fließt das Dichtungsmittel C im Fall des Öffnens des Dichtungssitzes nahe der Boden-Innenfläche.

Unterschiedliche Ausgestaltung der Stirnseite der Nadeln 30x oder der Stirnseite des Steuersteges 37 sind **in Figur 4** veranschaulicht. Es sind zwei Varianten für die Nadeln und zwei Varianten für die Stege dargestellt, wobei jede Variante bei jeder Form von Steuerglied (Nadeln oder Stellsteg) möglich ist. Eine abgerundete Form 35a und eine abgeschrägte Form 35b ist ebenso dargestellt für die Nadeln, wie eine Hammerkopf-Form 47k für einen Stellsteg 37 und eine im Querschnitt rechteckige Form für denselben Stellsteg. Die verschiedenen Stimformen der Nadeln oder des Stellsteges sind in ihrer Auftragswirkung in den **Figuren 5a bis 5d** veranschaulicht, wobei C den Fluß des Dichtungsmittels veranschaulicht und R den Dichtungsmassen-Ring im Dosenbord 81 des Deckels D bezeichnet.

In allen Figuren 5 sind die beiden Randstege 45b, 46b zu erkennen und im Querschnitt sind Nadeln 30x und Stellsteg 37 gleichermaßen ausgebildet, so daß die Figuren 5 alle sowohl für die Nadel 30x als auch für den Stellsteg 37 zu verstehen sind.

Wird an der einen Seite gegenüber der Mittellinie der Auftragsrinne 81 eine bevorzugte Dichtungsmittel-Menge gewünscht, so können die Randstege 45b, 46b unterschiedlich lang gestaltet werden (unsymmetrisch werden), wie in **Figur 6a** mit einer veränderten Höhe des inneren Randsteges 46b' gezeigt wird. **Figur 6b** veranschaulicht den in den Figuren 5 gezeigten Fall mit symmetrischen Stirnenden der Randstege 45b, 46b.

Die als Ventil wirkende Stufe 37b **in Figur 2b** ist jeweils auf der Seite des Stellsteges 37 ausgebildet, die im Kanal 40a einen Restraum zum Durchfließen des Compound beläßt, während die gegenüberliegende Seite abdichtend an der Innenwand des Kanals 40a anliegt.

Eine Stellbewegung x in axialer Richtung 100a, 100, veranlaßt durch die Gleichlauf-Stelleinrichtung, die über den zweigeteilten Behälter (dessen Kopfraum 42b und in dessen Dichtungsmittel-Volumen V) auf die Nadeln 30x oder den Steuersteg 37 aufgegeben wird, verändert den Dichtungsmittel-Fluß in der Menge und stellt den Dichtungsmittel-Fluß auch ganz ab. Es gibt sowohl die Möglichkeit einer linearen Verstellung der Dichtungsmittelmenge, als auch die bloße Steuerung des Einschaltens und des Abschaltens des Dichtungsmittel-Flusses. Die Zeit, mit der Durchfluß für das Dichtungsmittel C freigegeben wird, ist bestimmend für die Menge des Dichtungsmittels, das durch die bodenseitige Öffnung - seien es Bohrungen 40x oder ein Bodenschlitz 40a - hindurch gelangt. Die Menge des Dichtungsmittels, die hindurch fließt, ist dabei abhängig von der Viskosität und diese von der Temperatur und der aktuell vorliegenden Dichtungsmittel-Mischung. Um alle Parameter gleichzeitig zu berücksichtigen, ist es am günstigsten, eine Messung der Position und der Dicke des Dichtungsringes R im Dosenbord 81 vorzunehmen und abhängig von dieser Messung eine Veränderung der Stellbewegung x zu veranlassen, sei sie in Form einer Verstellung im Analogbereich, also geringfügig mehr oder geringfügig weniger Dichtungsmittel, oder sei sie in Form einer veränderten Zeitspanne, in der der Dichtungssitz 33a, 41a oder 37b, 41c oder 37a, 41a freigegeben wird. Durch diese Art der geschlossenen Regelschleife ergibt sich innerhalb kurzer Zeit ein eingeschwungener Zustand, so daß nur wenige - wenn überhaupt - Dosendeckel 80 bzw. D mit einem nicht optimalen Dichtungsmittel-Belag R in ihrem Randbereich 81 versehen werden.

Nach Erreichen eines stationären Zustandes kann des Zeitintervall, in dem die Messung durchgeführt wird, vergrößert werden. Wenn eine Veränderung der Temperatur, der Dichtungsmittel-Zusammensetzung oder der Stellzeit oder Stellamplitude bei analoger Verstellung vorgenommen worden ist, kann die Messung in kürzeren Abständen, z.B. jeder Deckel oder jeder zweiter Deckel vorgenommen werden.

Die Abtastzeit ist für letztere Ausführung also nicht konstant.

Die Frequenz, mit der eine Stellbewegung erfolgt, ist aber in jedem Fall eine sehr niedrige Frequenz, abhängig von der Geschwindigkeit der Deckel-Zuführung. Meist wird nicht mehr als eine Aufwärts- und eine Abwärtsbewegung (+x₁, -x₁) benötigt, um den Dichtungssitz zu öffnen und zu schließen und zwischen Öffnen und Schließen eine vorbestimmte und genau definierte Dichtungsmittel-Menge in den Dosenrand 81 einzubringen. Mit dieser Stellbewegung ist nur eine geringe Frequenz verbunden, so daß die vergleichsweise große Masse der Vielzahl von zu steuernden Nadeln 30x oder die Masse des Nadelhalters 24a, 24b oder Gleitgürtels 24c gegenüber der gewünschten Genauigkeit entlang des gesamten Auftragskanals 48 zurücktritt.

## Patentansprüche

1. Verfahren *zum gleichmäßigen Auftragen* von fluidem Dichtungswerkstoff (C,R) in den ovalen oder langovalen Rumpfhaken oder Deckelhaken (81;81i,81n,81r) eines Deckels (D), um einen dichten Doppelfalz-Verschluß vorzubereiten, bei dem
(a) eine Vielzahl von Nadeln (30a,30b,30c,...;30x) oder ein umlaufender Ringsteg (37) mit ihrem jeweiligen vorderen Ende (35a,35b,35c,...;35x;38a,38b) durch jeweils eine zugeordnete bodenseitige Öffnung (40,40a,40b;40x) eines Behälters (43,44,40,42) *in einen umlaufenden Auftragskanal (48) ragen,* der von zwei begrenzenden Randstegen (45b,46b) gebildet wird; **dadurch gekennzeichnet, dass**
(b) alle Nadeln (30x) gemeinsam oder der Ringsteg (37) von rückwärts (31a,32a,...;31x,32x) her im Auftragskanal (48) *axial verstellt werden, ohne daß* ihr kanalseitiges Ende (35a,...,35x;38a,38b) *Axial-Stellkräfte vom* Rumpfhaken oder vom Deckelhaken (81n) *aufnimmt*, um den fluiden Dichtungswerkstoff aus dem Behälter, über den Auftragskanal (48) in den Rumpf- oder Deckelhaken *aufzutragen*.

2. Verfahren nach Anspruch 1, bei dem die kanalseitigen Enden (35x) der Nadeln (30x) oder das Frontende (38a,38b) des Ringstegs (37) den Boden (81n) einer mit fluidem Dichtungswerkstoff (C) zu beschichtenden Rinne (81n,81r,81i) des Deckels (D) beim Auftragen des Dichtungswerkstoffs nicht berührt.

3. Verfahren nach einem der Ansprüche 1 oder 2, bei dem das kanalseitige Ende (38a,38b) des Ringsteges (37) im Kanal (48) stirnseitig verbreitet ist und dort aufund abbewegt wird bzw. in seiner Lage verändert wird (x).

4. Verfahren nach einem der Ansprüche 1 bis 3, bei dem die kanalseitigen Enden (35x) der Nadeln (30x) oder die Stirnseite (38a,38b) des Ringsteges (37) beim Sperren der Dichtungsmittel-Auftragung am Dichtungssitz (33x,41x) nicht über die untersten Ränder der fest ausgebildeten Randstege (46b,45b) des Auftragskanales (48) hervorstehen.

5. Verfahren nach Anspruch 4, bei dem die Randstege (45b,46b,46b') des Kanals (48) verschieden lang sind und/oder der Ringsteg als Steuerring (37) aus der Mitte des Kanals (48) in seitlicher Richtung versetzt ist, um auf seinen beiden Seiten ungleich breite Durchflußströme des Dichtungsmittels (C,R) passieren zu lassen.

6. Verfahren nach einem der Ansprüche 1 bis 5, bei dem das kanalseitige Ende (35x) der Nadeln (30a,...;30x) oder das kanalseitige Ende (38a,38b) des Ringstegs als Steuerring (37) den Dichtungsmittelstrom verändernd durch ein konisch, abgerundet, einseitig abgeschrägt oder zylindrisch bzw. eckig ausgebildetes Ende beeinflußt.

7. Verfahren nach einem der Ansprüche 1 bis 6, bei dem der Verstellhub (x) der Nadeln (30x) oder des Ringsteges (37,38) von einer Gleichlauf-Stelleinrichtung (22a,22b,21,24a,24b; 24c;23a,23b) gesteuert wird, die insbesondere im Inneren (V) des Behälters (40,42,43,44) bewegt wird, in dem der flüssige Dichtungswerkstoff (C) enthalten ist.

8. Verfahren nach Anspruch 7, bei dem die Gleichlauf-Stelleinrichtung von einem Weggeber (20) außerhalb, insbesondere oberhalb des Behälters (40,42,43,44) für das Dichtungsmittel angebracht ist und durch eine abdichtende Haube (42,42a) hindurch (22a,22b;21) die Gleichlauf-Stelleinrichtung axial verschiebend bewegt.

9. Verfahren nach einem der Ansprüche 1 bis 8, wobei die Gleichlauf-Stelleinrichtung der Form des Deckels (D) bzw. des Deckelrandes (81) angepaßt ist.

10. Verfahren nach einem der Ansprüche 1 bis 9, bei dem durch die Stellbewegung (x) der Nadeln (30x; x=a,b...) oder des Ringsteges (37) ein Dichtungssitz (33a,...;33x;41a,...;41x) im Behälterboden (40) in seiner Durchlaßwirkung bzw. in seiner Dichtwirkung steuernd verändert wird, um den durch die Schwerkraft oder durch einen Innendruck verursachten Strom von fluidem Dichtungswerkstoff (C) durch die bodenseitigen Öffnungen (40a,...;40x) des Behälters (40,42,43,44) zu steuern.

11. **Auftragsverfahren** für einen fluiden Dichtungswerkstoff, bei dem zumindest ein Steuerglied (30a,...;30x;x=a,b,c...;37,38) in Form einer Vielzahl von Nadeln oder eines Innenstegs mit einem konischen oder stufigen Bereich als Steuerbereich (33a;37a,37b) gegenüber einem Dichtungssitz (41a,...;41x) in einem Behälter gesteuert verändert wird,
**gekennzeichnet dadurch, daß** ohne ein kraftmäßiges Berühren einer Auftragsstelle (81n) eine bestimmte, veränderbare Dichtungswerkstoff-Menge mit einer Breite und einer Dicke in einer Rinne oder einem Haken (81) aufgetragen wird, indem das Steuerglied von rückwärts in axialer Richtung (100a) nach Art einer geschlossenen Regelschleife verstellt (x) wird, abhängig von einem Meßwert über die Breite, die Dicke und/oder die Position des verfestigten Dichtungswerkstoffs (R) in der Rinne oder dem Haken (81).

12. Verfahren nach Anspruch 11, bei dem die Messung über Dicke und Position des Dichtungsmittel-Auftrags (R) nicht bei jedem Deckel, sondern in vorbestimmten Zeitabständen nach einer jeweils vorbestimmten - inbesondere sich ändernden - Anzahl von Dichtungsmittel-Auftragsvorgängen vorgenommen wird.

13. Verfahren nach Anspruch 11 oder 12, bei dem nach einer erfolgten Axialverstellung von Nadeln (30x) oder einem Innensteg (37) als Stellglied häufiger eine Messung durchgeführt wird, bis ein stabiler Zustand hinsichtlich Dicke und Lage des Dichtungsmittel-Auftrages (R) in der Rinne oder dem Haken (81) erreicht ist.

14. Verfahren nach Anspruch 11, wobei die axiale Verstellung eine Veränderung der Zeitdauer der Öffnung des zumindest einen aus Steuerbereich und Dichtungssitz gebildeten Ventils ist.

15. Verfahren nach Anspruch 11, wobei die Verstellung über einen Weggeber gesteuert wird.

16. Vorrichtung zum gleichmäßigen Auftragen von fluidem Dichtungswerkstoff in den Rumpfhaken oder den Deckelhaken eines Deckels zur Durchführung des Verfahrens nach einem der obigen Ansprüche, bei der eine Stelleinrichtung eine Vielzahl von kranzartig angeordneten Nadeln (30x) oder einen nicht unterteilten Innensteg (36,37,38) trägt, die/der in bodenseitige Öffnung(en) (40x) eines Behälters ragen, **dadurch gekennzeichnet, daß**
(a) der Behälter (40,42,43,44) eine nach innen weisende Wandung (44) aufweist, die zusammen mit einer äußeren Wandung (43) einen ringförmigen Behälterinhalt (V) definiert, in dem die Stelleinrichtung als eine Gleichlauf-Stelleinrichtung (23a,23b,24a,24b;24c) angeordnet ist, die parallel zu der Innenwandung (44) aufwärts und abwärts bewegbar ist;
(b) die Gleichlauf-Stelleinrichtung durch den Deckel (42) des Behälters greift (21) und von außen mechanisch betätigbar ist (20).

17. Vorrichtung nach Anspruch 16, bei dem der Innensteg als Steuerring (37) an seinem kanalferen Ende ein einteilig angeformtes Winkelstück (36) aufweist, mit dem er an der Unterseite eines Haltegürtels (24c) angebracht ist.

18. Vorrichtung nach Anspruch 16, bei der
(a) die Gleichlauf-Stelleinrichtung zwei mit definierten, festem Abstand beabstandete Ringhalter (24a,24b) aufweist, die nach aufwärts mehrere - insbesondere symmetrisch entlang des Halters verteilte - Stellstößel (22a,22b) und nach abwärts hin achsparallele (100x) Nadeln (30x) tragen, die zusammen mit den parallelen Halter (24a,24b) und den Stellstößeln (22a,22b) bewegbar sind; oder
(b) die Gleichlauf-Stelleinrichtung einen Gleitgürtel (24c) aufweist, der mit einer breiten Innenfläche (24d) an der Innenwandung (44) gleitend anliegt und von Stellstößeln (22a,22b) entlang der Innenfläche auf- und abwärts bewegbar (x) ist und an seiner Unterseite den Innensteg (36,37,38) trägt.

19. Vorrichtung nach Anspruch 18, Alternative (a), bei der die Nadeln (30x) an der einen und an der anderen Ringscheibe fest angeordnet sind (31a,32a,31b,32b,..31x,32x), um alle Nadeln gemeinsam betätigbar zu halten.

20. Vorrichtung nach einem der vorhergehenden Vorrichtungsansprüche, bei der die beabstandeten Ringhalter (24a,24b) oder der Gleitgürtel (24c) oder der Ringsteg oder Innensteg (37,38) eine lang-ovale Form haben, entsprechend der Form der Rinne (81), in die Dichtungsmittel aufzutragen ist.

21. Vorrichtung nach einem der vorigen Vorrichtungsansprüche, **dadurch gekennzeichnet, daß** der Innensteg als Steuerring (37) an einer Kante eine Schräge (47k) aufweist, die in Richtung zum Auftragsbereich (R) zeigt und einem der Stege (46b) des Kanales (48) benachbart ist.

22. Vorrichtung nach einem der vorigen Vorrichtungsansprüche, bei der die bodenseitige Öffnung (41a) ein durchgehender Schlitz (40a) ist und der Innensteg als Steuersteg (37) eine oder zwei umlaufende geschrägte Bereiche (37a) aufweist, die mit einem oder zwei gegenschrägen Bereich(en) (41a) am inneren Rand des Behälterbodens (40) des Bodenschlitzes (40a) durchlaßsteuernd zusammenwirken.

23. Vorrichtung nach einem der Ansprüche 16 bis 21, bei der die bodenseitige Öffnung ein durchgehender Schlitz (40a) ist und der Steuerring oder Ringsteg als Steuersteg (37) eine oder zwei umlaufende stufige Bereiche (37b) aufweist, die mit einem oder zwei inneren Rändern (41c) des Bodenschlitzes (40a) im Behälterboden (40) durchlaßsteuernd zusammenwirken.

24. Vorrichtung nach Anspruch 23, bei der ein stufiger Bereich (37b) auf der Außenseite des Steuerstegs (37) vorgesehen ist, der mit der nach innen (V) zeigenden Kante (41c) des Bodenschlitzes (40a) durchlaßsteuernd, insbesondere abscherend, zusammenwirkt.

25. Vorrichtung nach einem der vorigen Vorrichtungsansprüche, bei der die Breite des Steuerstegs (37) im Bodenschlitz (40a) geringer, insbesondere etwa halb so breit, wie die Breite des Bodenschlitzes (40a) ist.

26. Vorrichtung nach einem der vorigen Vorrichtungsansprüche,
bei dem die Breite des Steuerstegs (37) im stufigen Bereich (37b) etwa der Breite des Bodenschlitzes (40a) entspricht.

27. Vorrichtung nach Anspruch 26, bei der die Breite des stufigen Bereichs (37b) des Steuerstegs (37) führungsgenau der Breite des Steuerschlitzes entspricht, um bei Einfahren des stufigen Bereiches (37b) in den Steuerschlitz durch Absenken des Ringgürtels (24c) zuerst eine das Dichtungsmittel (C) abscherende und dann sperrende Wirkung zu erhalten.

28. Vorrichtung nach einem der obigen Vorrichtungsansprüche, bei dem die Nadeln oder der Innensteg in einen Auftragskanal (48) ragen, der profiliert ist und zyklisch seine Breite (48',48") verändert, insbesondere dort breiter (48") ist, wo die Öffnungen (40x) für die Nadeln (30x) in den Kanal (48) münden.

29. Vorrichtung nach einem der obigen Vorrichtungsansprüche, bei dem die axiale Länge des Steuersteges (37) zwischen Stirnseite (38) und stufigem Bereich (37b) so gewählt ist, daß bei Beginn des Abscherens des Dichtungsmittelflusses an der oder den Kanten (41c) des Bodenschlitzes (40a) die Stirnseite (38) noch nicht aus dem bodenseitigen Schlitz (40a) und seinen nicht flexiblen Randstegen (46b,45b) herausragt.

## Claims

1. Process for uniform application of fluid sealing material (C, R) into the oval or long-oval body hook or lid hook (81; 81i, 81n, 81r) of a lid (D) in order to prepare a tight double-seam closure, in which
(a) a plurality of needles (30a, 30b, 30c, ...; 30x) or an annular ring bar (37) project with their particular front end (35a, 35b, 35c, ...; 35x; 38a, 38b) through in each case an assigned base-side opening (40, 40a, 40b; 40x) of a container (43, 44, 40, 42) into an annular application channel (48), which is formed by two defining edge bars (45b, 46b);
**characterised in that**
(b) all needles (30x) together or the ring bar (37) are adjusted axially from the rear (31a, 32a, ...; 31x, 32x) in the application channel (48) without their channel-side end (35a, ..., 35x; 38a, 38b) absorbing axial adjusting forces from the body hook or from the lid hook (8 In), in order to apply the fluid sealing material from the container, via the application channel (48) into the body or lid hook.

2. Process according to claim 1, in which the channel-side ends (35x) of the needles (30x) or the front end (38a, 38b) of the ring bar (37) does not touch the base (8 In) of a duct (81n, 81r, 81i) of the lid (D) to be coated by fluid sealing material (C) during application of the sealing material.

3. Process according to one of claims 1 or 2, in which the channel-side end (38a, 38b) of the ring bar (37) is widened on the end-face side in the channel (48) and is moved up and down there or its position is changed (x).

4. Process according to one of claims 1 to 3, in which the channel-side ends (35x) of the needles (30x) or the end-face side (38a, 38b) of the ring bar (37) do not project beyond the lowest edges of the rigidly designed edge bars (46b, 45b) of the application channel (48) during blocking of sealing agent application at the seal seat (33x, 41x).

5. Process according to claim 4, in which the edge bars (45b, 46b, 46b') of the channel (48) have different lengths and/or the ring bar as control ring (37) is offset from the centre of the channel (48) in lateral direction, in order to allow unequally wide throughflow streams of sealing agent (C, R) to pass on its two sides.

6. Process according to one of claims 1 to 5, in which the channel-side end (35x) of the needles (30a, ...; 30x) or the channel-side end (38a, 38b) of the ring bar as control ring (37) influences the sealing agent stream in changing manner due to an end designed in conical, rounded, single-sidedly bevelled or cylindrical or angular manner.

7. Process according to one of claims 1 to 6, in which the adjusting stroke (x) of the needles (30x) or of the ring bar (37, 38) is controlled by a synchronised adjusting device (22a, 22b, 21, 24a, 24b; 24c; 23a, 23b), which is moved in particular in the interior (V) of the container (40, 42, 43, 44), in which the liquid sealing material (C) is present.

8. Process according to claim 7, in which the synchronised adjusting device is attached by a motion pickup (20) outside, in particular above the container (40, 42, 43, 44) for the sealing agent, and moves the synchronised adjusting device through (22a, 22b; 21) a sealing hood (42, 42a) in axially displaceable manner.

9. Process according to one of claims 1 to 8, wherein the synchronised adjusting device is adapted to the shape of the lid (D) or of the lid edge (81).

10. Process according to one of claims 1 to 9, in which due to the adjusting movement (x) of the needles (30x; x=a, b...) or of the ring bar (37), the passage effect or the sealing effect of a seal seat (33a, ...; 33x; 41a, ...; 41x) is changed in controlling manner in the container base (40), in order to control the stream of fluid sealing material (C), caused by the gravitational force or by an internal pressure, through the base-side openings (40a, ...; 40x) of the container (40, 42, 43, 44).

11. Application process for a fluid sealing material, in which at least one control element (30a, ...; 30x; x=a, b, c ...; 37, 38) in the form of a plurality of needles or an inner bar having a conical or a graduated region as control region (33a; 37a, 37b) is changed in controlled manner with respect to a seal seat (41a, ...; 41x) in a container, **characterised in that** without forced contact of an application point (81n), a certain, changeable quantity of sealing material is applied with a width and a thickness in a duct or a hook (81) by adjusting (x) the control element from the rear in axial direction (100a) like a type of closed control loop, depending on a measured value for the width, the thickness and/or the position of the solidified sealing material (R) in the duct or the hook (81).

12. Process according to claim 11, in which the measurement of thickness and position of sealing agent application (R) is not carried out for each lid, but in predetermined time intervals after an in each case predetermined - in particular changing - number of sealing agent application actions.

13. Process according to claim 11 or 12, in which after axial adjustment of needles (30x) or an inner bar (37) as control element has taken place, a measurement is carried out more often until a stable state is achieved with regard to thickness and position of sealing agent application (R) in the duct or the hook (81).

14. Process according to claim 11, wherein the axial adjustment is a change in duration of opening of the at least one valve formed from control region and seal seat.

15. Process according to claim 11, wherein the adjustment is controlled via a motion pickup.

16. Device for uniform application of fluid sealing material in the body hook or the lid hook of a lid for carrying out the process according to one of the above claims, in which an adjusting device supports a plurality of needles (30x) arranged like a circle or an undivided inner bar (36, 37, 38), which project into base-side opening(s) (40x) of a container, **characterised in that**
(a) the container (40, 42, 43, 44) has an inwardly pointing wall (44), which together with an outer wall (43) defines an annular container content (V), in which the adjusting device is arranged as a synchronised adjusting device (23a, 23b, 24a, 24b; 24c), which can be moved upwards and downwards parallel to the inner wall (44);
(b) the synchronised adjusting device engages (21) through the lid (42) of the container and can be mechanically actuated (20) externally.

17. Device according to claim 16, in which the inner bar as control ring (37) has at its channel-remote end, an integrally moulded-on angle plate (36), with which it is attached to the lower side of a restraining belt (24c).

18. Device according to claim 16, in which
(a) the synchronised adjusting device has two ring holders (24a, 24b) spaced at defined, fixed distance, which towards the top support several adjusting rams (22a, 22b) - in particular distributed symmetrically along the holder - and towards the bottom axis-parallel (100x) needles (30x), which can be moved together with the parallel holders (24a, 24b) and the adjusting rams (22a, 22b); or
(b) the synchronised adjusting device has a sliding belt (24c), which rests slidingly with a wide inner surface (24d) on the inner wall (44) and can be moved (x) upwards and downwards by adjusting rams (22a, 22b) along the inner surface and on its under side supports the inner bar (36, 37, 38).

19. Device according to claim 18, alternative (a), in which the needles (30x) are rigidly arranged (31a, 32a, 31b, 32b, ..31x, 32x) on the one and on the other ring disc, in order to hold all needles together to be actuatable.

20. Device according to one of the preceding device claims, in which the spaced ring holders (24a, 24b) or the sliding belt (24c) or the ring bar or inner bar (37, 38) have a long-oval shape, corresponding to the shape of the duct (81), into which sealing agent is to be applied.

21. Device according to one of the previous device claims, **characterised in that** the inner bar as control ring (37) has at one edge a slope (47k), which points in the direction towards the application region (R) and is adjacent one of the bars (46b) of the channel (48).

22. Device according to one of the previous device claims, in which the base-side opening (41a) is a continuous slot (40a) and the inner bar as control bar (37) has one or two annular sloped regions (37a), which cooperate in passage-controlling manner with one or two counter-sloped region(s) (41a) on the inner edge of the container base (40) of the base slot (40a).

23. Device according to one of claims 16 to 21, in which the base-side opening is a continuous slot (40a) and the control ring or ring bar as control bar (37) has one or two annular graduated regions (37b), which cooperate in passage-controlling manner with one or two inner edges (41c) of the base slot (40a) in the container base (40).

24. Device according to claim 23, in which a graduated region (37b) is provided on the outer side of the control bar (37), which cooperates in passage-controlling manner, in particular in shearing-off manner, with the edge (41c) pointing inwards (V) of the base slot (40a).

25. Device according to one of the previous device claims, in which the width of the control bar (37) in the base slot (40a) is lower, in particular about half as wide as the width of the base slot (40a).

26. Device according to one of the previous device claims, in which the width of the control bar (37) in the graduated region (37b) corresponds approximately to the width of the base slot (40a).

27. Device according to claim 26, in which the width of the graduated region (37b) of the control bar (37) corresponds in guide-precise manner to the width of the control slot, in order to obtain first of all an effect shearing off the sealing agent (C) and then a blocking effect when moving the graduated region (37b) into the control slot by lowering the ring belt (24c).

28. Device according to one of the above device claims, in which the needles or the inner bar project into an application channel (48), which is profiled and changes its width (48', 48") cyclically, in particular is wider (48") where the openings (40x) for the needles (30x) lead into the channel (48).

29. Device according to one of the above device claims, in which the axial length of the control bar (37) between end-face side (38) and graduated region (37b) is selected so that at the start of shearing-off of the sealing agent flow at the edge or the edges (41c) of the base slot (40a), the end-face side (38) does not yet project from the base-side slot (40a) and its non-flexible edge bars (46b, 45b).

## Revendications

1. Procédé de déposition uniforme d'une matière d'étanchéité fluide (C, R) dans les becs de corps ou les becs de couvercle (81 ; 81i, 81n, 81r) ovales ou ovales oblongs d'un couvercle (D) en vue de préparer une fermeture à double pli, dans lequel
a) chaque aiguille d'un grand nombre d'aiguilles (30a, 30b, 30c, ...,30x), ou une nervure annulaire périphérique (37), fait saillie par son extrémité avant correspondante (35a, 35b, 35c, ... ; 35x ; 38a, 38b) à travers une ouverture associée (40, 40a, 40b ; 40x) ménagée dans le fond d'une boîte (43, 44, 40, 42) dans un canal de déposition périphérique (48) qui est formé par deux nervures marginales (45b, 46b) ; **caractérisé en ce que**
b) toutes les aiguilles (30x) ensemble ou bien la nervure annulaire périphérique (37) sont déplacées axialement de l'arrière (31a, 32a, ... ; 31x, 32x) dans le canal de déposition (48) sans que leur extrémité (35a, ..., 35x ; 38a, 38b) du côté du canal ne soit soumise à des forces axiales générées par le bec de corps ou le bec de couvercle (81n), pour déposer la matière d'étanchéité fluide de la boîte dans le bec de corps ou de couvercle par l'intermédiaire du canal de déposition.

2. Procédé selon la revendication 1, dans lequel les extrémités (35x), se trouvant du côté du canal, des aiguilles (30x) ou de l'extrémité frontale (38a, 38b) de la nervure annulaire (37) ne sont pas en contact avec le fond (81n) d'une gouttière (81n, 81r, 81i), à enduire de matière d'étanchéité fluide (C), du couvercle (D) lors de la déposition de matière d'étanchéité.

3. Procédé selon la revendication 1 ou 2, dans lequel l'extrémité (38a, 38b), se trouvant du côté du canal, de la nervure annulaire (37) est élargie du côté frontal dans le canal et est soulevée et abaissée dans celui-ci ou bien sa position (x) est modifiée.

4. Procédé selon l'une des revendications 1 à 3, dans lequel les extrémités (35x), se trouvant du côté du canal, des aiguilles (30x) ou bien la face frontale (38a, 38b) de la nervure annulaire (37) ne dépassent pas des bords les plus inférieurs de la nervure marginale (46, 45b) du canal de déposition (48) conformée fixe lorsque la déposition de matière d'étanchéité sur le siège d'étanchéité (33x, 41x) est bloquée.

5. Procédé selon la revendication 4, dans lequel les nervures marginales (45b, 46b, 46b') du canal (48) ont des longueurs différentes et/ou la nervure annulaire se présentant sous la forme d'une nervure de commande (37) est décalée latéralement par rapport au milieu du canal (48) afin de laisser passer la matière d'étanchéité (C, R) sur ses deux côtés avec des débits différents.

6. Procédé selon l'une des revendications 1 à 5, dans lequel l'extrémité (35x), se trouvant du côté du canal, des aiguilles (30a, ... ; 30x) ou l'extrémité (38a, 38b), se trouvant du côté du canal, de la nervure annulaire se présentant sous la forme d'une nervure de commande (37) influe de façon variable sur le débit de la matière d'étanchéité au moyen d'une extrémité conformée pour être conique, arrondie, biseautée d'un côté ou cylindrique resp. polygonale.

7. Procédé selon l'une des revendications 1 à 6, dans lequel la course réglable (x) des aiguilles (30x) ou de la nervure annulaire (37, 38) est commandée par un dispositif de réglage synchronisé (22a, 22b, 21, 24a, 24b ; 24c ; 23a, 23b) qui est déplacé en particulier à l'intérieur (V) de la boîte (40, 42, 43, 44) contenant la matière d'étanchéité fluide (C).

8. Procédé selon la revendication 7, dans lequel le dispositif de réglage synchronisé est fixé par un capteur de déplacement (20) à l'extérieur, en particulier au-dessus de la boîte (40, 42, 43, 44) destinée à la matière d'étanchéité et le dispositif de réglage synchronisé (22a, 22b ; 21) se déplace en translation axiale en passant à travers un capot étanche (42, 42a).

9. Procédé selon l'une des revendications 1 à 8, dans lequel le dispositif de réglage synchronisé est adaptée à la forme du couvercle (D) ou du bord (81) du couvercle.

10. Procédé selon l'une des revendications 1 à 9, dans lequel le mouvement de réglage (x) des aiguilles (30x ; x = a, b ...) permet de modifier façon commandée le débit ou le degré d'étanchéité permis par un siège d'étanchéité (33a, ... ; 33x ; 41x) dans le fond (40) de la boîte afin de commander le débit de matière d'étanchéité fluide (C), généré par la force de pesanteur ou à la pression interne, à travers les ouvertures (40,a, ... ; 40x) ménagées dans le fond de la boîte (40, 42, 43, 44).

11. Procédé de déposition d'une matière d'étanchéité fluide, dans lequel au moins un élément de commande (30a, ... ; 30x ; x = a, b, c ... ; 37, 38) se présentant sous la forme d'un grand nombre d'aiguilles ou d'une nervure intérieure avec une région conique ou en gradins et servant de région de commande (33a ; 37a, 37b) est modifié de façon commandée par rapport à un siège d'étanchéité (41a, ... ; 41x) dans une boîte, **caractérisé en ce qu'**une quantité de matière d'étanchéité déterminée variable, présentant une largeur et une épaisseur, est déposée dans une gouttière ou un bec (81) sans contact en force avec un emplacement de déposition (81), en réglant une valeur (x) de l'élément de commande depuis l'arrière dans une direction axiale (100a) selon le type d'une boucle de régulation fermée, en fonction d'une valeur mesurée de la largeur, l'épaisseur et/ou la position de la matière d'étanchéité (R) déposée dans la gouttière ou le bec (81).

12. Procédé selon la revendication 11, dans lequel la mesure de l'épaisseur et de la position du dépôt de matière d'étanchéité (R) n'est pas effectuée pour chaque couvercle, mais à des intervalles de temps prédéterminés après un nombre de processus de déposition de matière d'étanchéité qui est prédéterminé, en particulier variable.

13. Procédé selon la revendication 11 ou 12, dans lequel une mesure est effectuée plus fréquemment après avoir effectué un réglage axial des aiguilles (30x) ou d'une nervure intérieure (37) servant d'élément de commande, jusqu'à ce que l'épaisseur et la position du dépôt de matière d'étanchéité (R) dans la gouttière ou dans le bec (81) soient stabilisées.

14. Procédé selon la revendication 1, dans lequel le réglage axial consiste à modifier la durée de l'ouverture de l'au moins un clapet constitué par la région de commande et le siège d'étanchéité.

15. Procédé selon la revendication 11, dans lequel le réglage est commandé par un capteur de déplacement.

16. Dispositif de déposition uniforme de matière d'étanchéité fluide dans le bec de corps ou le bec de couvercle d'un couvercle en vue de mettre en oeuvre le procédé selon l'une des revendications précédentes, dans lequel un dispositif de réglage supporte un grand nombre d'aiguilles (30x) disposées en couronne ou une nervure intérieure (36, 37, 38) d'une seule pièce, lesquelles font saillie dans une ou des ouvertures (40x) ménagées dans le fond d'une boîte, **caractérisé en ce que**
a) la boîte (40, 42, 43, 44) comporte une paroi intérieure (44) qui délimite conjointement avec une paroi extérieure (43) un volume intérieur de boîte (V) de forme annulaire dans lequel est disposé le dispositif de réglage se présentant sous la forme d'un dispositif de réglage synchronisé (23a, 23b, 24a, 24b ; 24c) qui est mobile suivant des mouvements de soulèvement et d'abaissement parallèlement à la paroi intérieure (44) ;
b) le dispositif de réglage synchronisé traverse (21) le couvercle (42) de la boîte et peut être actionné (20) mécaniquement de l'extérieur.

17. Dispositif selon la revendication 16, dans lequel la nervure intérieure se présentant sous la forme d'une nervure de commande (37) présente au niveau de son extrémité dotée d'un canal une équerre (36) réalisée d'une seule pièce au moyen de laquelle ladite nervure intérieure est appliquée sur la face inférieure d'une ceinture de retenue (24c).

18. Dispositif selon la revendication 16, dans lequel
a) le dispositif de réglage synchronisé comporte deux supports annulaires (24a, 24b), espacés d'une distance fixe définie, qui supportent vers le haut plusieurs coulisseaux (22a, 22b) de réglage, en particulier répartis symétriquement le long du support, et vers le bas des aiguilles (30x) parallèles à l'axe (100x) qui sont mobiles conjointement avec les supports parallèles (24a, 24b) et les coulisseaux de réglage (22a, 22b) ; ou
b) le dispositif de réglage synchronisé comporte une ceinture coulissante (24c) dont la large face intérieure (24d) porte à coulissement sur la paroi intérieure (44) et qui peut être déplacée d'une distance (x) vers le haut et vers le bas par les coulisseaux de réglage (22a, 22b) le long de la face intérieure et dont la face intérieure supporte la nervure intérieure (36, 37, 38).

19. Dispositif selon la revendication 18, qui est une variante (a) dans laquelle les aiguilles (30x) sont disposées fixes sur l'un ou l'autre des disques annulaires (31a, 32a, 31b, 32b, ..., 31x, 32x) de façon à supporter toutes les aiguilles pour qu'elles puissent être actionnées en même temps.

20. Dispositif selon l'une des revendications précédentes relatives aux dispositif, dans lequel les supports annulaires (24a, 24b) ou la ceinture coulissante (24c) ou la nervure annulaire ou la nervure intérieure (37, 38) ont une forme oblongue correspondant à la forme de la gouttière (81) dans laquelle doit être déposée la matière d'étanchéité.

21. Dispositif selon l'une des revendications précédentes relatives au dispositif, **caractérisé en ce que** la nervure intérieure se présentant sous la forme d'une nervure de commande (37) comporte au niveau d'un bord un biseau (47k) qui est dirigé vers la région de déposition (R) et qui est adjacent à l'une des nervures (46b) du canal (48).

22. Dispositif selon l'une des revendications précédentes, dans lequel l'ouverture (41a), ménagée dans le fond, est une fente traversante (40a) et la nervure intérieure se présentant sous la forme d'une nervure de commande (37) comporte une ou deux régions biseautées périphériques (37a) qui coopèrent avec une ou deux régions biseautées homologues (41a) au niveau du bord intérieur de la fente (40a) ménagée dans le fond (40) de la boîte en vue de commander le passage.

23. Dispositif selon l'une des revendications 16 à 21, dans lequel l'ouverture, ménagée dans le fond, est une fente traversante (40a) et la bague de commande ou nervure annulaire se présentant sous la forme d'une nervure de commande (37) comporte une ou deux régions périphériques en gradins (37b) qui coopèrent avec un ou deux bords (41c) de la fente (40a) ménagée dans la fond (40) de la boîte en vue de commander le passage.

24. Dispositif selon la revendication 23, dans lequel une région en gradins (37b) est prévue sur le côté extérieur de la nervure de commande (37) qui coopère avec le bord (41c) dirigé vers l'intérieur (V) de la fente (40a) ménagée dans le fond en vue de commander le passage, en particulier par cisaillement.

25. Dispositif selon l'une des revendications précédentes relatives au dispositif, dans lequel la largeur de la nervure de commande (37) dans la fente (40a) ménagée dans le fond est inférieure à la largeur de la fente (40a) ménagée dans le fond, en particulier elle est à peu près égale à la moitié de celle-ci.

26. Dispositif selon l'une des revendications précédentes relatives au dispositif, dans lequel la largeur de la nervure de commande (37) dans la région en gradins (37b) correspond à peu près à la largeur de la fente (40a) ménagée dans le fond.

27. Dispositif selon la revendication 26, dans lequel la largeur de la région en gradins (37b) de la nervure de commande (37) correspondant à la largeur de la fente de commande en vue de réaliser une précision de guidage et d'obtenir tout d'abord une action de cisaillement de la matière d'étanchéité puis une action de blocage lorsque la région en gradins (27b) est insérée dans la fente de commande par abaissement de la ceinture annulaire (24c).

28. Dispositif selon l'une des revendications précédentes relatives au dispositif, dans lequel les aiguilles ou la nervure intérieure font saillie dans un canal de déposition (48) qui est profilé et dont la largeur (48', 48") varie cycliquement, en particulier est plus grande (48") là où les ouvertures (40x) destinées aux aiguilles débouchent dans le canal (48).

29. Dispositif selon l'une des revendications précédentes relatives au dispositif, dans lequel la longueur axiale de la nervure de commande (37) entre la face frontale (38) et la région en gradins (37b) est choisie de telle sorte que la face frontale (38) ne fait pas encore saillie de la fente (40a) ménagée dans le fond ni ne dépasse des nervures marginales rigides (46b, 45b) de ladite fente au début du cisaillement du flux de matière d'étanchéité au niveau du ou des bords (41c) de la fente (40a) ménagée dans le fond.
